# EUROPEAN PATENT APPLICATION

(11) **EP 2 316 734 A2**
(43) Date of publication of application: **04.05.2011**
(21) Application number: 10186488.2
(22) Date of filing: 05.10.2010
(51) Int. Cl.: B64D 13/02

(54) **Method of supplying a breathing gas to an aircrew in an aircraft**

(30) Priority: 30.10.2009 GB 0919032
(71) Applicant: Honeywell Aerospace BV, 1101 EA Amsterdam (NL); Honeywell UK Limited, Bracknell Berkshire RG12 1EB (GB)
(72) Inventor: Tucker, Paul, Chard, Somerset TA20 2SB (GB)
(74) Representative: Lucking, David John

(57) **Abstract**

A method of operating an aircraft (10), the aircraft (10) including a cabin (12) for the aircrew (14) which is pressurised in normal flight, and a deployment door (16) which is opened in high altitude flight when the cabin (12) will be depressurised, to enable a passenger (20) and/or a load (18) to be deployed from the depressurised cabin (12) of the aircraft (10) to the ground, the aircraft (10) including an installed breathing gas system (24) for providing a limited capacity supply of breathing gas to the aircrew (14) in the cabin (12) in the event of an emergency cabin de-compression, the installed breathing gas system (24) including a face mask (30) for the or each aircrew (14) member, a source (26a, 26b) of breathing gas being substantially pure oxygen, and a line (28) from the source (26a, 26b) to the or each face mask (30) for delivering the breathing gas to the aircrew (14), the method including prior to take-off on a mission according to a mission plan, determining whether the mission plan includes depressurising the cabin (12) and opening the deployment door (16) at high altitude, and where the cabin (12) is planned to be depressurised at high altitude, prior to take-off on the mission, loading onto the aircraft (10) an auxiliary breathing gas supply system (40) for supplying breathing gas to the aircrew (14) both during a preparation period prior to the planned cabin depressurisation when the cabin (12) is pressurised, to prepare the aircrew (14) for the planned cabin depressurisation, and during the planned cabin depressurisation, and connecting the auxiliary breathing gas supply system (40) to the installed breathing gas system (24) so that when required breathing gas is supplied to the or each face mask (30) along at least a part of the line (28), from the auxiliary breathing gas supply system (40).

## Description

### Description of lnvention

This invention relates to a method of supplying breathing gas to an aircrew in an aircraft.

It is well known to provide on an aircraft which has a pressurised cabin for the aircrew, a supply of breathing gas which typically is 100% or near, oxygen, for use in the event of an emergency depressurisation of the cabin. Such a supply of breathing gas typically is provided compressed in one or more gas storage bottles or is stored as liquid gas and gassified for use. Upon an emergency cabin depressurisation, the aircrew tend to control the aircraft rapidly to lose height, until the aircraft is below a minimum altitude at which the aircrew can breathe the ambient air. Thus only a relatively small supply of breathing gas is required to be stored in gas bottles for emergency use by the aircrew.

Aircraft are also well known in which there is provided a door which is openable in normal flight to enable a passenger, e.g. a paratrooper, and/or a load, to be deployed from the aircraft when in normal flight, by parachute or the like. In some applications it is a requirement that the door is opened at high altitude, i.e. an altitude above a maximum altitude at which the crew would be able to survive for a substantial period, by breathing the ambient air. Thus when the door is opened, the cabin is depressurised and aircrew of the aircraft require breathing gas to be supplied with at least enhanced oxygen content.

When a mission, during which the door of the aircraft will be opened, is planned, the altitude at which the door will be opened to deploy the passenger and/or load, will be established, and thus upon take-off the aircrew will know at what altitude the cabin will be depressurised. The mission plan will also be able to provide a reasonable estimate of when the passenger and/or load is to be deployed.

To prepare the aircrew for the planned cabin depressurisation, where above the maximum altitude, when the door will be opened, it is usual practice for the aircrew (and any passenger(s)) to be supplied with oxygen, breathing gas for a preparation period prior to the planned cabin depressurisation so that the aircrew member's (and a passenger's) bodies are physiologically prepared. This preparation period might commence before the aircraft has taken off where the mission time to deployment is small. Typically a preparation period of about an hour prior to a planned high altitude cabin depressurisation is required, during which preparation period the aircrew (and any passenger(s)) would be supplied with breathing gas. In this way, their bodies' tolerance to the sudden depressurisation is enhanced.

With the typical current proposal, this requires that more breathing gas is carried in the aircraft than would be required solely for use in an emergency depressurisation, in extra or larger oxygen bottles of the installed breathing gas system, i.e. as part of the aircraft infrastructure. This increases the aircraft weight, and thus reduces the aircraft payload and/or increases fuel consumption.

According to the invention we provide a method of operating an aircraft, the aircraft including a cabin for the aircrew which is pressurised in normal flight, and a deployment door which is opened in high altitude flight when the cabin will be depressurised, to enable a passenger and/or a load to be deployed from the depressurised cabin of the aircraft to the ground, the aircraft including an installed breathing gas system for providing a limited capacity supply of breathing gas to the aircrew in the cabin in the event of an emergency cabin de-compression, the installed breathing gas system including a face mask for the or each aircrew member, a source of breathing gas being substantially pure oxygen, and a line from the source to the or each face mask for delivering the breathing gas to the aircrew, the method including prior to take-off on a mission according to a mission plan, determining whether the mission plan includes depressurising the cabin and opening the deployment door at high altitude, and where the cabin is planned to be depressurised at high altitude, prior to take-off on the mission, loading onto the aircraft an auxiliary breathing gas supply system for supplying breathing gas to the aircrew both during a preparation period prior to the planned cabin depressurisation when the cabin is pressurised, to prepare the aircrew for the planned cabin depressurisation, and during the planned cabin depressurisation, and connecting the auxiliary breathing gas supply system to the installed breathing gas system so that when required, breathing gas is supplied to the or each face mask along at least a part of the line, from the auxiliary breathing gas supply system.

By virtue of the present invention, at least where the planned depressurisation is to occur at a low altitude at which the aircrew can breath ambient air, it is only necessary for the aircraft to carry a source of substantially pure oxygen sufficient for use in the event of an emergency depressurisation, but where the planned depressurisation is to occur at high altitude, the auxiliary breathing gas supply system may be loaded onto the aircraft prior to take-off.

Thus the method of the present invention enables a saving in weight at least when the planned cabin depressurisation is to occur at low altitude, compared with known proposals, as the aircraft is not required always to carry the auxiliary breathing gas supply system as part of the essential infrastructure of the aircraft.

In one arrangement the auxiliary breathing supply system includes a source of substantially pure oxygen breathing gas, such as a store of oxygen, or the necessary materials to create oxygen by chemical reaction. The method may include adjusting the pressure of the breathing gas from the source of the connected auxiliary breathing gas supply system to regulate the pressure to substantially the same pressure as the breathing gas provided by the installed breathing gas system, and in use supplying the substantially pure oxygen breathing gas from the auxiliary breathing gas supply system to the or each face mask.

In another arrangement, the auxiliary breathing gas supply system may include an oxygen enriching device which in use produces oxygen enriched breathing gas which is less than 100% pure oxygen, the method including rendering operative the connected oxygen enriching device to supply the less than 100% pure oxygen to the or each face mask. Such an oxygen enriching device may be used where the planned depressurisation is below a threshold altitude above which it would be advisable to supply substantially pure oxygen to the aircrew.

Preferably the method includes, prior to take-off, determining the altitude of the aircraft during the planned cabin depressurisation, and where aircraft altitude at which the cabin is planned to be depressurised is a high altitude below a threshold altitude, loading onto the aircraft an auxiliary breathing gas supply system which includes an oxygen enriching device for providing breathing gas which is less than 100% oxygen, and where the aircraft altitude at which the cabin is planned to be depressurised is a high altitude, above the threshold altitude, loading onto the aircraft an auxiliary breathing gas supply system for supplying breathing gas which includes a source of substantially pure oxygen.

An oxygen enriching device which is able to provide breathing gas for the aircrew at less than 100% pure oxygen will be lighter than, for example, one or more oxygen bottles supplied to carry enough substantially pure oxygen for preparing for, and for breathing during, a planned decompression.

The line from the source of breathing gas of the installed breathing gas system to the face mask, may include a first part of a coupling apparatus and the auxiliary breathing gas supply system may include a breathing gas outlet which includes a second part of the coupling apparatus. The method may include engaging the first and second coupling parts to connect the auxiliary breathing gas supply system to the installed breathing gas system. For example, the first and second coupling parts may be engaged by mutual push fitting.

The first part of the coupling apparatus may include a valve which is urged towards a closed position to prevent breathing gas escaping from the line when the first and second coupling parts are disengaged. The method may include moving the valve to an open position upon engaging the first and second coupling parts.

Embodiments of the invention will now be described with reference to the accompanying drawings in which:-
FIGURE 1 is an illustrative view of an aircraft operated by a method of the invention;
FIGURE 2 is a diagrammatic view of a coupling apparatus of a breathing gas system of the aircraft of figure 1.

Referring to the drawings there is shown an aircraft 10 which includes a cabin 12 which in this example includes an aircrew area 13 for aircrew members 14 (only one of which is shown in the example), and a passenger/load area 15. The cabin 12 is in normal high altitude flight pressurised so that the aircrew 14 and any passengers 20 can breathe the pressurised air in the cabin 12.

The aircraft 10 is of the kind which has a deployment door 16, in this example a rear door 16, which is designed to be opened in normal flight to permit a load, such as the packages indicated at 18, and/or one or more passengers such as paratroopers 20, to be deployed to the ground, using parachutes or the like.

In the example, the door 16 is pivoted downwards to the dotted line position, and may be extendible as suggested by the arrows, to facilitate load 18, and/or passenger 20 deployment.

It will be appreciated that when the deployment door 16 is opened (or typically in a more controlled manner, prior to the door 16 being opened), the cabin 12 will be depressurised. At high altitude flight, i.e. typically above 9,000 ft, the aircrew 13 and any passenger 20 would not be able to breathe the ambient air for any substantial period and obtain sufficient oxygen at such high altitude.

It is desirable to prepare the aircrew 14 and any passenger 20 for a planned depressurisation of the cabin 12 by supplying to the aircrew 14 and any passenger 20, breathing gas with a higher oxygen content than the air in the cabin 12, in advance of the planned cabin depressurisation, for example up to an hour before the planned depressurisation occurs. This preparation period enables the aircrew member's 14 and any passenger's 20 body for example, to be physiologically prepared. Thus a pilot 14 for example would remain fully able to control the aircraft, and for the passenger's 20 descent to the ground, during which descent no supply of breathing gas may be available, the passenger 20 would be able to survive during the descent by breathing the ambient air, and/or with the aid of a portable oxygen supply set because of the previous preparation.

The present invention is concerned with supplying breathing gas to the aircrew 14 both during the preparation period before the planned cabin depressurisation and during the planned cabin depressurisation.

The aircraft 10 infrastructure necessarily includes an installed breathing gas system 24 which includes a source of substantially pure oxygen to supply breathing gas to the aircrew 14 in the event of an emergency depressurisation of the cabin 12.

Substantially pure oxygen gas for the source, is carried in one or more gas bottles 26a, 26b, two bottles in this example, in a compressed state or the installed breathing system 24 may include the means to combine materials chemically to produce oxygen gas for breathing. In use of the installed breathing gas system 24, the oxygen gas is conveyed along a line 28 between the bottles 26a, 26b (or other source), and a face mask or masks 30 which in use is worn by the or each aircrew member 14. This installed breathing gas system is able to supply enough breathing gas to the aircrew 14 in an emergency to enable an aircraft, in an emergency decompression situation, to descend to a height at which ambient air can provide sufficient oxygen for breathing in a reasonable time frame. However the emergency supply is of limited capacity.

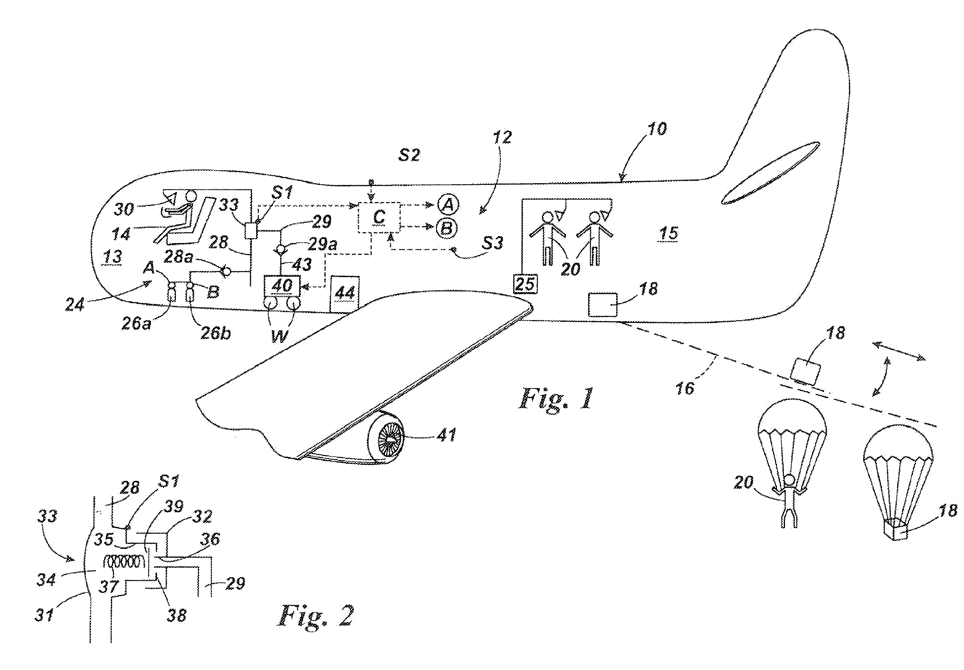

For the purpose of performing the present invention, the installed breathing gas system 24 includes a first part 31 (see figure 2) of a coupling apparatus 33, which coupling apparatus 33 includes a second part 32 which is not part of the installed breathing gas system 24. The first part 31 is provided in the line 28 between the oxygen bottles 26a, 26b and the face mask(s) 30, and includes in the example a main flow passage 34 which is permanently open to permit breathing gas from the bottles 26a, 26b to flow to the face mask(s) 30, and a branch passage 35 in which there is provided a spring biased valve member 39 which when closed by a spring 37 onto a seat 38, prevents the escape of the breathing gas from line 28 via the branch passage 35.

In figure 1 of the drawings, there is shown an auxiliary breathing gas supply system 40 in the aircraft. The auxiliary breathing gas supply system 40 is one of an oxygen enriching device which receives pressurised air, for example compressed air from a compressor section of an engine 41 of the aircraft 10 and provides enriched oxygen content product, breathing gas, or includes a source, such as a store, of substantially pure oxygen breathing gas. Where the auxiliary breathing gas supply system 40 is an oxygen enriching device this may include a bed of material such as a zeolite, over which the pressurised air is passed, whilst the zeolite adsorbs nitrogen thus producing a product gas which is predominantly oxygen. Such a device is known as an On-Board Oxygen Generator ("OBOG"). In the example, in its operation, such an OBOG may be conventional.

Typically the OBOG would contain a pair (or more) of zeolite beds, and whilst one at least one of the beds is producing oxygen, the other or another of the zeolite beds is regenerated by being exposed to low ambient pressures by means of which the adsorbed nitrogen is purged from the bed.

An OBOG may be configured to produce product gas which is highly oxygen enriched, for example up to 98% oxygen enriched, but not 100% pure as atmospheric gases other than Nitrogen, notably Argon, are not so readily adsorbed by the zeolite.

The construction of such OBOGS is well established and further detail is not required here. However, as desired, another kind of oxygen enriching device for the auxiliary breathing gas supply system 40 could be used in place of the OBOG, which produces a product gas with enriched oxygen, which typically would not be substantially 100% oxygen. For example the oxygen enriching device could be a Ceramic Oxygen Generator (known as a "COG").

Where the auxiliary breathing gas supply system 40 includes a source of substantially pure oxygen, the gas may be provided in a store of one or more storage cylinders or bottles, the or each of which would be fitted with its own control valve, so that the high pressure oxygen provided from such cylinders/bottles can be regulated to the same pressure as the breathing gas in the line 28, provided by the installed breathing gas system 24.

The breathing gas produced by the auxiliary breathing gas supply system 40 passes to a breathing gas outlet 43 of the system 40 which includes a product gas feed conduit 29, which extends towards the first part 31 of the coupling apparatus 33, and the outlet conduit 29 terminates (in this example) with the second part 32 of the coupling apparatus 33. The first and second parts 31, 32 of the coupling apparatus 33 are arranged to engage as suggested in the figure 2 diagram, e.g. by a push fit. On engaging the first and second parts 31, 32, the spring biased valve 39 of the first part 31 is opened to allow breathing gas communication from the auxiliary breathing gas supply system 40 to the branch passage 35 of the first coupling apparatus part 31, and hence to the line 28 of the installed breathing gas system 24, and hence to the face mask(s) 30. To achieve this the second coupling apparatus part 32 includes an actuating element 36 which extends through the valve seat 38 as the first and second coupling parts 31, 32 are connected, to move the spring biased valve 39 off the valve seat 38 against the force of the spring 37.

The gas feed conduit 29 and/or the gas outlet 43 and/or another part of the auxiliary breathing gas supply system 40 may include a valve which is manually or automatically opened when the system 40 is installed, to permit breathing gas to flow to the coupling apparatus 33. Such a valve may otherwise be closed to prevent such flow.

The auxiliary breathing gas supply system 40 is mobile. In the present example, the auxiliary breathing gas supply system 40 includes wheels W. When the first and second parts 31, 32 of the coupling apparatus 33 are separated, and subject to the ready disconnection of any other connections e.g. where the auxiliary breathing gas supply 40 includes an OBOG connected to receive compressed air from the engine 41, that connection, and of any electrical control connections, the auxiliary breathing gas supply system 40 may readily be removed from the aircraft 10 e.g. in the example, via a hold door 44 in a side of a fuselage of the aircraft 10, or otherwise, e.g. via the deployment door 16.

In another example, the auxiliary breathing gas supply system 40 may be mobile by being carried on a pallet and loaded onto the aircraft 10 with the packages 18 which could also be palletised, when the aircraft 10 is loaded on the ground.

On planning a mission in which a load such as packages 18 are to be deployed, and/or one or more passengers 20 e.g. a paratrooper, is/are to be deployed to the ground from the deployment door 16 of the aircraft 10 in flight, a determination is made as to where and when the load/passenger 18/20 is to be deployed. Thus it will be planned at what altitude the cabin 12 will be depressurised, and when.

In the event that the mission plan is to deploy the load and/or passenger 20 at a low altitude less than an altitude at which the aircrew 14 and passenger 20 would be able to breathe the ambient air, e.g. below 9,000 ft, i.e. the cabin 12 will only be pressurised to a small extent if at all, and no auxiliary breathing gas supply system 40 would be required to provide breathing gas. Because even though the cabin 12 may be planned to be depressurised at such low altitude the aircraft 10 may still be required to fly at higher altitudes, there will still be a requirement for a source 26a, 26b of substantially pure breathing gas to be carried in the aircraft 10 for use in the event of an emergency depressurisation in higher altitude flight. However there is no requirement for the auxiliary breathing supply system 40 as this is not used according to the mission plan, and the source of oxygen in the installed bottles 26a, 26b can provide breathing gas in an emergency.

Accordingly, the auxiliary breathing supply 40 may be removed or not loaded into the aircraft 10 prior to take-off. When the first and second parts 31, 32 of the coupling apparatus 33 are separated, the installed breathing gas system will operate substantially conventionally, but only in the event of an emergency cabin 13 depressurisation in high altitude flight.

In the event that the mission plan is to deploy the load 18 and/or passenger(s) 20 at a high altitude, above the maximum altitude at which ambient air may be breathed, e.g. above about 9,000 ft, and above a threshold altitude e.g. 18,000 ft, at which it is desirable for the aircrew 14 to be prepared before the planned cabin 12 depressurisation, and during the planned cabin 12 depressurisation, it is desired for the aircrew 14 to be supplied with a breathing gas which is substantially pure oxygen. Thus for the preparation period and during the planned cabin 12 depressurisation, additional pure oxygen to that already provided in the gas bottles 26a, 26b, would be required. In this circumstance, the auxiliary breathing gas supply system 40 would be planned to be used and so the auxiliary breathing gas supply system 40 needs to be loaded onto the aircraft 10 prior to take-off on the planned mission. Because the planned decompression is at very high altitude, i.e. above the threshold altitude, the auxiliary breathing gas supply system 40 which is used, includes a source, e.g. bottles of substantially pure oxygen, or another source of substantially pure oxygen.

If the mission plan is to deploy the load 18 and/or passenger 20 at high altitude above the maximum altitude at which ambient air may be breathed by the aircrew 14 but below the threshold altitude at which substantially pure oxygen breathing gas would be desired for preparing the aircrew 14 and during cabin 12 depressurisation, an auxiliary breathing gas supply system 40 which is an oxygen enriching device such as an OBOG 40, may be loaded into the aircraft 10 prior to take off on the mission.

In each case, at least prior to the preparation period, the first and second parts 31, 32 of the coupling apparatus 33 would be engaged, along with any other connections which are required to render the auxiliary breathing gas supply system 40 operative when required.

During the preparation period, prior to the planned cabin 12 depressurisation, and during the planned depressurisation during which the door 16 will be opened and the load 18 and/or passenger 20 deployed to the ground, breathing gas may be supplied to the aircrew 14 by the auxiliary breathing gas supply system 40. When the door 10 is subsequently closed again, the cabin 12 may be re-pressurised when the aircrew 14 may again breathe the pressurised air in the cabin 12.

The decision as whether or not to carry on the aircraft 10 an auxiliary breathing gas supply system 40 will be taken on consideration of the mission plan. To save carrying additional substantially pure oxygen in additional heavy bottles, when the planned load 18 and/or passenger 20 deployment from the depressurised cabin 12 is to occur at high altitude lower than the very high threshold altitude, the auxiliary breathing gas supply system 40 which includes an oxygen enriching device such as an OBOG 40 or other oxygen enriching device may be loaded onto the aircraft 10 prior to take-off. Where the deployment is to occur at high altitude above the very high threshold altitude, such that substantially pure oxygen breathing gas would be required, an auxiliary breathing gas supply system 40 of additional oxygen bottles or another source of substantially pure oxygen (e.g. a liquid oxygen supply or a chemical oxygen producing apparatus) would be required to carry enough oxygen for use during the preparation period and during the planned depressurisation.

Because the auxiliary breathing gas supply system 40 is readily disconnected from especially the line 28, because of the provision of the coupling apparatus 33, and is provided on wheels W for example, or otherwise is mobile, the auxiliary breathing gas supply system 40 may be readily removed when not required by the mission plan so as not to add to aircraft weight (and take up additional space), or readily loaded onto the aircraft 10 when required by the mission plan, the auxiliary breathing gas supply system 40 not being an essential part of the aircraft 10 infrastructure.

It can be seen from figure 1, that in the line 28 between the source 26a, 26b of substantially pure oxygen for the emergency gas supply, and the face mask(s) 30, upstream of the coupling apparatus 33, there is a one-way valve 28a, which in the event that the auxiliary breathing gas supply system 40 is coupled to the line 28 via the coupling apparatus 33 and is operative, closes so that auxiliary breathing gas from the auxiliary breathing gas supply system 40 does not pass to back to the source 26a, 26b. Also, there is a similar one-way valve 29a in the conduit 29 between the breathing gas outlet 43 of the auxiliary breathing gas supply and the second part 32 of the coupling apparatus 33, so that in the event of an emergency cabin 12 depressurisation, when emergency breathing gas is supplied from the source 26a, 26b of substantially pure oxygen, such gas cannot pass to the auxiliary breathing gas supply 40. Other features may be added to the installed breathing gas system 24 and auxiliary breathing gas supply system 40 to ensure the most efficient and proper operation as will be apparent to those skilled in the art. For example pressure regulation devices, sensors to sense the pressure of the substantially pure oxygen in the bottles 26a, 26b etc may be provided.

In the example, the installed breathing gas system 24 includes a controller C to control the system. The controller C is connected to valves A, B associated with the bottles 26a, 26b of substantially pure oxygen of the installed emergency breathing gas supply, to open the valves A, B to allow the substantially pure oxygen to flow in line 28 when required in an emergency. The controller C in this example, is also connected by a readily disconnectable connection, to the auxiliary breathing gas supply system 40, and the controller C at least interfaces with a control of the auxiliary breathing gas supply system 40, to ensure its proper operation when required, or the controller C may actually control the auxiliary breathing gas supply system 40 as required.

The coupling apparatus 33 in the example includes a first sensor S1 which provides an input to the controller C which indicates when the first and second parts 31, 32 of the coupling apparatus 33 are connected, and the controller C receives altitude information from a second altitude sensor S2. A third sensor S3 provides an indication of the cabin 12 pressure.

The controller C responds to the inputs from the sensors S1, S2, S3 at least, to operate the valves A, B of the installed gas supply 24, and to operate the auxiliary breathing gas supply 40 according to the methodology described.

A separate breathing gas system 25 for the or each passenger 20 may be provided as required, which may or may not be removable from the cabin 12 in the same or a similar manner to the auxiliary breathing gas supply system 40 described above. The separate breathing gas system 25 for the or each passenger 20 may include a supply of breathing gas, e.g. substantially pure oxygen carried compressed in one or more oxygen bottles or an OBOG or the like. The separate breathing gas system 25 for the or each passenger may supply breathing gas to the passenger(s) 20 when the aircraft 10 is at a high altitude, during the preparation period before the planned cabin 12 depressurisation, and during the planned depressurisation at least until the or each passenger 20 is deployed from the aircraft 10. The separate breathing gas system 25 may also be used in the event of an emergency cabin 12 depressurisation prior to the passenger(s) being deployed, to supply emergency breathing gas to the passenger(s) 20.

Although the aircrew area 13 and the load/passenger area 15 of the cabin 12 may adjoin and thus be commonly pressurised in normal flight, the breathing gas systems 24, 25 for the aircrew 14 and passengers 20 are preferably completely separate functionally.

Various modifications may be made in addition to those already described, including of the operational methodology, without departing from the scope of the invention. For example, the aircraft 10 shown and described is a fixed wing aircraft, but may be a rotary wing aircraft. Where the aircraft 10 is only used for deploying a load 18, not any passenger(s) 20, the separate breathing gas system 25 need not be provided at all.

Typically an aircraft 10 would have at least two, probably more aircrew members 14. The coupling apparatus 33 for coupling the auxiliary breathing gas supply system 40, which is shown and described, is purely exemplary and illustrative.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A method of operating an aircraft (10), the aircraft (10) including a cabin (12) for the aircrew (14) which is pressurised in normal flight, and a deployment door (16) which is opened in high altitude flight when the cabin (12) will be depressurised, to enable a passenger (20) and/or a load (18) to be deployed from the depressurised cabin (12) of the aircraft (10) to the ground, the aircraft (10) including an installed breathing gas system (24) for providing a limited capacity supply of breathing gas to the aircrew (14) in the cabin (12) in the event of an emergency cabin de-compression, the installed breathing gas system (24) including a face mask (30) for the or each aircrew (14) member, a source (26a, 26b) of breathing gas being substantially pure oxygen, and a line (28) from the source (26a, 26b) to the or each face mask (30) for delivering the breathing gas to the aircrew (14), the method including prior to take-off on a mission according to a mission plan, determining whether the mission plan includes depressurising the cabin (12) and opening the deployment door (16) at high altitude, and where the cabin (12) is planned to be depressurised at high altitude, prior to take-off on the mission, loading onto the aircraft (10) an auxiliary breathing gas supply system (40) for supplying breathing gas to the aircrew (14) both during a preparation period prior to the planned cabin depressurisation when the cabin (12) is pressurised, to prepare the aircrew (14) for the planned cabin depressurisation, and during the planned cabin depressurisation, and connecting the auxiliary breathing gas supply system (40) to the installed breathing gas system (24) so that when required breathing gas is supplied to the or each face mask (30) along at least a part of the line (28), from the auxiliary breathing gas supply system (40).

2. A method according to claim 1 **characterised in that** the auxiliary breathing supply system (40) includes a source of substantially pure oxygen breathing gas.

3. A method according to claim 1 or claim 2 **characterised in that** the method includes adjusting the pressure of the breathing gas from the source of the connected auxiliary breathing gas supply system (40) to regulate the pressure to substantially the same pressure as the breathing gas provided by the installed breathing gas system (24), and in use supplying the breathing gas from the auxiliary breathing gas supply system (40) to the or each face mask (30).

4. A method according to claim 1 **characterised in that** the auxiliary breathing gas supply system (40) includes an oxygen enriching device which in use produces oxygen enriched breathing gas which is less than 100% pure oxygen, the method including rendering operative the connected oxygen enriching device to supply the less than 100% pure oxygen to the or each face mask (30).

5. A method according to claim 1 **characterised in that** the method includes, prior to take-off, determining the altitude of the aircraft (10) during the planned cabin (12) depressurisation, and where aircraft altitude at which the cabin (12) is planned to be depressurised is a high altitude below a threshold altitude, loading onto the aircraft (10) an auxiliary breathing gas supply system (40) which includes an oxygen enriching device for providing breathing gas which is less than 100% oxygen, and where the aircraft altitude at which the cabin (12) is planned to be depressurised is a high altitude above the threshold altitude, loading onto the aircraft (10) an auxiliary breathing gas supply system (40) for supplying breathing gas which includes a source of substantially pure oxygen.

6. A method according to any one of the preceding claims **characterised in that** the line (28) from the source (26a, 26b) of breathing gas of the installed breathing gas system (24) to the face mask (30), includes a first part (31) of a coupling apparatus (33) and the auxiliary breathing gas supply system (40) includes a breathing gas outlet (43) which includes a second part (32) of the coupling apparatus (33), the method including engaging the first and second coupling parts (31, 32) to connect the auxiliary breathing gas supply system (40) to the installed breathing gas system (24).

7. A method according to claim 6 **characterised in that** the first and second coupling parts (31, 32) are engaged by push fitting.

8. A method according to claim 6 or claim 7 **characterised in that** the first part (31) of the coupling apparatus (33) includes a valve (39) which is urged towards a closed position to prevent breathing gas escaping from the line (28) when the first and second coupling parts (31, 32) are disengaged, the method including moving the valve (39) to an open position upon engaging the first and second coupling parts (31, 32).
